Europäisches Patentamt

European Patent Office

Office européen des brevets

(11) Veröffentlichungsnummer: **0 137 887**
A2

# (12) EUROPÄISCHE PATENTANMELDUNG

(21) Anmeldenummer: 84100650.5

(22) Anmeldetag: 23.01.84

(51) Int. Cl.⁴: **C 09 K 17/00, C 04 B 28/26**

(30) Priorität: 30.09.83 DE 3335489

(43) Veröffentlichungstag der Anmeldung: 24.04.85
Patentblatt 85/17

(84) Benannte Vertragsstaaten: **AT BE CH DE FR GB IT LI LU NL SE**

(71) Anmelder: **Henkel Kommanditgesellschaft auf Aktien, Postfach 1100 Henkelstrasse 67, D-4000 Düsseldorf-Holthausen (DE)**

(72) Erfinder: **Fehr, Hans, Burscheider Strasse 45, D-4000 Düsseldorf (DE)**
Erfinder: **Pesch, Wolfgang, Nolthausener Strasse 10, D-4048 Grevenbroich (DE)**
Erfinder: **Friedemann, Wolfgang, Dr., Stephanusstrasse 14, D-4040 Neuss 23 (DE)**

(54) Härter für Alkalimetallsilikatlösungen für die Bodenverfestigung.

(57) Gegenstand der Erfindung sind Härtergemische für Alkalimetallsilikatlösungen, die dadurch gekennzeichnet sind, daß sie 20 bis 60 Gew.-%, bezogen auf die Gesamtmenge an Härter, Kohlensäuredimethylester und 80 bis 40 Gew.-%, bezogen auf die Gesamtmenge an Härter, Kohlensäurediethylester enthalten und wässrigen Alkalimetallsilikatlösungen in einer Menge von 4 bis 11 Gew.-% zugesetzt werden.

EP 0 137 887 A2

Patentanmeldung    D6883

0137887
HENKEL KGaA
ZR-FE/Patente

Dr.Zt/KK

Henkelstr. 67
4000 Düsseldorf, den 28.9.83

Patentanmeldung D 6883   EP

## Härter für Alkalimetallsilikatlösungen
## für die Bodenverfestigung

Wässrige Alkalimetallsilikatlösungen für die Verfestigung und Abdichtung von Erdreich sind seit langem bekannt und werden, in großem Umfang in der Praxis eingesetzt. Besonders beim U-Bahnbau werden Alkalimetallsilikatlösungen in das Erdreich injiziert, um den Boden zu verfestigen und so bereits errichtete Gebäude
zu unterfangen.

So wird beispielsweise in der EP-A 0 028 495 ein Mittel zur Bodenverfestigung beschrieben, das neben wässrigen Alkalimetallsilikatlösungen Glyoxal und Wasserstoffperoxid sowie gegebenenfalls anorganische Salze
enthält. Durch Verfestigung des Erdreiches mit diesen
Mitteln wird jedoch eine befriedigende Druckfestigkeit
nicht erreicht.

Die Härtung von Alkalimetallsilikatlösungen mit Estern
organischer Säuren wird in den DE-OSen 21 64 957 und
21 65 912 beschrieben. Als Härter werden Alkylester
gegebenenfalls Halogen-, Cyan- oder Hydroxy-substitu-

0137887
HENKEL KGaA
ZR-FE/Patente

ierter Carbonsäuren, wie Ameisensäure, Essigsäure oder Propionsäure, oder von Dicarbonsäuren, wie Oxalsäure, Bernsteinsäure oder Adipinsäure verwendet.

Die Verwendung der genannten Ester führt jedoch zu einer hohen Belastung des Erdreiches und damit auch des Grundwassers mit organischen Substanzen, die im Verlauf der Gelier-Reaktion freigesetzt werden. Diese Belastung läßt sich anhand einer Erhöhung des Wertes für den chemischen Sauerstoff-Bedarfs (CSB) feststellen, der den Grad der Verunreinigung von Wasser mit organischen Verbindungen anzeigt; die Verwendung von Substanzen, die diesen Wert stark erhöhen, ist nicht akzeptabel.

In der DE-OS 21 64 957 wird auch die Verwendung von Dimethylcarbonat als Härter für Alkalimetallsilikatlösungen beschrieben, die in einem Verfahren zur Herstellung von Formkörpern aus Wasserglasschaum eingesetzt werden. In derartigen Verfahren sind kurze Topfzeiten, d.h. kurze Zeitspannen, in denen das Reaktionsgemisch erfindungsgemäß verarbeitet werden kann, erwünscht, wenn nicht sogar erforderlich. Die Topfzeiten werden mit maximal 10 Minuten angegeben.

Wässrige Alkalimetallsilikatlösugen, die Verwendung für die Verfestigung und Abdichtung von Erdreich finden sollen, erfordern jedoch Topfzeiten, die deutlich über 10 Minuten liegen, da die Gefahr besteht, daß das Silikat geliert oder sich verfestigt, bevor die Lösungen über die im allgemeinen verwendeten lanzenförmigen Vorrichtungen in das Erdreich eingebracht worden sind.

Überraschend wurde nun gefunden, daß Mischungen von Dimethylcarbonat und Diethylcarbonat ausgezeichnet als Härter für Alkalimetallsilikatlösungen geeignet sind, deren Topfzeiten zwischen 10 min und ca. 1 h liegen.

Gegenstand der Erfindung sind Härtergemische für Alkalimetallsilikatösungen, die dadurch gekennzeichnet sind, daß sie 20 bis 60 Gew.-%, bezogen auf die Gesamtmenge an Härter, Kohlensäuredimethylester und 40 bis 80 Gew.-%, bezogen auf die Gesamtmenge an Härter, Kohlensäurediethylester enthalten und wässrigen Alkalimetallsilikatlösungen in einer Menge von 4 bis 11 Gew.-% zugesetzt werden.

Die für die Verwendung der wässrigen Alkalimetallsilikatlösungen in der Verfestigung von Erdreich erwünschten Topfzeiten von 30 Minuten und mehr werden mit Härtermischungen erreicht, in denen der Anteil an Kohlensäurediethylester zwischen 40 und 80 Gew.-%, bezogen auf die Gesamtmenge an Härter, liegt. Dabei werden die Topfzeiten mit steigendem Anteil an Diethylcarbonat länger. Jedoch werden bei Diethylcarbonat-Konzentrationen in der Härtermischung von mehr als 80 Gew.-%, und der üblichen Gesamtkonzentration der Härtermischung von 10% in der Anwendungslösung Topfzeiten erzielt, die in Verfahren zur Verfestigung von Erdreich als zu lang angesehen werden. Auch Wasserzusätze verlängern die Topfzeit, so daß über eine Änderung dieser Parameter eine Steuerung der Weich- bzw. Hartgelbildung möglich ist.

Außer der Topfzeit läßt sich auch die Druckfestigkeit von verfestigtem Erdreich oder stellvertretend dafür die Druckfestigkeit zylindrischer Kieskörper, die unter Verwendung von Alkalimetallsilikatlösungen hergestellt wurden, mit dem Mischungsverhältnis der verwendeten erfindungsgemäßen Härtergemische korrelieren. Die Druckfestigkeiten steigen mit dem Anteil an Dimethylcarbonat in der Härtermischung. Die erzielten Werte für die Druckfestigkeit liegen mit der erfindungsgemäßen Härtermischung höher als Druckfestigkei-

Patentanmeldung  D6883 EP

ten, die unter Verwendung von Härtern auf der Basis von Carbonsäureestern nach dem Stand der Technik erzielt werden konnten.

Gegenüber der Verwendung von Härtergemischen nach dem Stand der Technik resultieren bei der Verwendung einer Härtermischung gemäß der vorliegenden Erfindung deutlich geringere Belastungen des Erdreichs und damit auch des Grundwassers mit organischen Bestandteilen. Dieses drückt sich durch stark herabgesetzte Werte des chemischen Sauerstoffbedarfs (CSB-Wert) aus. (s. Tab. 5). Dieser gewünschte Effekt kann durch zugesetzte Oxidationsmittel, die mit den Alkoholen reagieren, verstärkt werden.

Die erfindungsgemäßen Härtermischungen, deren Einwirkung auf wässrige Alkalimetallsilikatlösungen unter Ausfällung von Kieselsäure primär zur Ausbildung eines Weichgels und erst mit gewisser Verzögerung zur Ausbildung eines Hartgels führt, erlauben die Verwendung von Alkalimetallsilikatlösungen, die bevorzugt ein Molverhältnis von $SiO_2$ : $Na_2O$ von 4 : 1 bis 3,4 : 1 und einen Feststoffgehalt von 27 bis 35% aufweisen, bei der Verfestigung von Erdreich im U-Bahn-, Tunnel- und Bergbau sowie bei der Festlegung von Abfallhalden, Deponien und Böschungen.

Die Erfindung wird durch die nachstehenden Beispiele erläutert.

Beispiele 1 - 10

Durch Zusammenmischen von Kohlensäuredimethylester und Kohlensäurediethylester in den in Tabelle 1 angegebenen Gewichtsverhältnissen wurden Härtergemische herge-

0137887
HENKEL KGaA
ZR-FE/Patente

stellt, die wässrigen Natriumsilikat-Lösungen in einer Menge von 10% zugesetzt wurden. Zusammensetzung der Natriumsilikatlösung : 8,0% $Na_2O$, 26,9% $Si_2O$; 34,9% Gesamtfeststoffe)

Die unter Verwendung derartiger Lösungen erzielten Topfzeiten sind der nachfolgenden Tabelle 1 zu entnehmen. In allen Fällen wurde sowohl die Bildung eines Weichgels als auch die Bildung eines Hartgels beobachtet.

Tabelle 1

Topfzeiten von Natriumsilikat-Lösungen bei Verwendung von Härtergemischen gemäß der Erfindung in einer Menge von 10% (Beispiele 1 bis 10)

| Beispiel | Härtermischung | | Topfzeit |
|---|---|---|---|
| | a) $\underline{/\ GT\_7}$ | b) $\underline{/\ GT\_7}$ | (min) |
| 1 | 10 | – | 10 |
| 2 | 9 | 1 | 13 |
| 3 | 8 | 2 | 19 |
| 4 | 7 | 3 | 26 |
| 5 | 6 | 4 | 30 |
| 6 | 5,5 | 4,5 | 51 |
| 7 | 5 | 5 | 60 |
| 8 | 4 | 6 | 63 |
| 9 | 3 | 7 | 69 |
| 10 | 2 | 8 | 104 |

Bemerkungen: a) Kohlensäuredimethylester

b) Kohlensäurediethylester

(Angaben in Gewichtsteilen $\underline{/\ GT\_7}$)

## Beispiele 11 - 13

Wässrigen Natriumsilikat-Lösungen wurden nach Beispiel 1 - 10 die erfindungsgemäßen Härtermischungen mit den in Tabelle 2 angegebenen Zusammensetzungen in einer solchen Menge zugegeben, daß die Gesamtkonzentration an Härter in den Lösungen zwischen 5 und 10 Gew.-% lag. Die mit solchen Härtergemischen erzielten Topfzeiten sind ebenfalls der nachfolgenden Tabelle 2 zu entnehmen. Zum Vergleich ist nochmals die Topfzeit der Härtermischung aus Beispiel 8 angegeben.

### Tabelle 2

Topfzeiten von Natriumsilikat-Lösungen bei Verwendung von Härtergemischen in einer Menge von 5 - 10 Gew.-% (Beispiele 11 - 13)

| Beispiel | Härtermischung | | Gesamtmenge | Topfzeit |
|---|---|---|---|---|
| | a) $\underline{\sqrt{\ }GT\underline{\ }7}$ | b) $\underline{\sqrt{\ }GT\underline{\ }7}$ | Härter | (min) |
| 11 | 2 | 3 | 5 % | 48 |
| 12 | 3 | 4 | 7 % | 88 |
| 13 | 2 | 6 | 8 % | 88 |
| 8 | 4 | 6 | 10 % | 63 |

Bemerkungen: a) Kohlensäuredimethylester
b) Kohlensäurediethylester
(Angaben in Gewichtsteilen $\underline{\sqrt{\ }GT\underline{\ }7}$)

## Beispiele 14 - 18

Entsprechend Beispiel 5 wurden Härtergemische hergestellt, die wässrigen Natriumsilikat-Lösungen zusammen mit unterschiedlichen Mengen destillierten Wassers zugemischt wurden. Die mit derartigen Mischungen erzielten Topfzeiten sind der nachfolgenden Tabelle 3 zu entnehmen. Zum Vergleich wurden die Angaben für die Mischung des Beispiels 5 aus Tabelle 1 mit in Tabelle 3 aufgenommen.

Tabelle 3

Topfzeiten von Natriumsilikat-Lösungen bei Verwendung von Härtergemischen zusammen mit destilliertem Wasser (Beispiele 14 - 18)

| Bsp. | Härter-mischungen a) /¯GT_7 | b) /¯GT_7 | Gesamt-menge Härter(%) | Zusatz $H_2O$ (%) | Topfzeit (min) |
|------|------|------|------|------|------|
| 14 | 6 | 4 | 10 | 10,0 | 63 |
| 15 | 6 | 4 | 9,5 | 4,8 | 45 |
| 16 | 6 | 4 | 9,1 | 9,1 | 63 |
| 17 | 6 | 4 | 8,7 | 13,0 | 49 |
| 18 | 6 | 4 | 8,3 | 16,6 | 55 |
| 5 | 6 | 4 | 10 | - | 30 |

Bemerkungen: a) Kohlendäuredimethylester
b) Kohlensäurediethylester
(Angaben in Gewichtsteilen /¯GT_7)

Beispiel 19
Bestimmung der Druckfestigkeit

a) Herstellung der Prüfkörper
4,2 Gewichtsteile (GT) Kies mit einer Korngröße = 6 mm wurden mit 1 GT der Wasserglas/Härter-Mischung 2 min lang im Hobart-Mischer N 50 gemischt. 250 - 270 g dieser Mischung wurden in einer Kunststoffröhre eingewo-

Patentanmeldung D 6883 EP

0137887

HENKEL KGaA
ZR-FE/Patente

gen und zu zylindrischen Prüfkörpern (h = 60 mm, $\emptyset$ = 50 mm) per Hand verdichtet. Nach Ablauf der Gelierungszeit wurden die Proben waagerecht zwecks Aushärtung 1,5 h lang bei Raumtemperatur gelagert, die Prüfkörper aus dem Kunststoffrohr herausgedrückt und in einem Polybecher luftdicht verpackt.

Ein Teil der Prüfkörper wurde auf seine Druckfestigkeit nach 7 Tagen Lagerung bei Raumtemperatur im verschlossenen Polybecher geprüft. Ein weiterer Teil der Prüfkörper wurde 6 Tage bei Raumtemperatur in destilliertem Wasser gelagert und danach auf seine Druckfestigkeit überprüft. Die Bestimmung der Druckfestigkeit wurde mit dem Druckfestigkeitsprüfapparat nach G. Fischer durchgeführt.

In der nachfolgenden Tabelle 4 werden die Druckfestigkeiten der so hergestellten und behandelten Prüfkörper verglichen mit den Druckfestigkeiten von Prüfkörpern, die mit Härtern nach dem Stand der Technik hergestellt und gleich behandelt worden waren.

Patentanmeldung   D6883   EP

Tabelle 4

Druckfestigkeiten von Prüfkörpern

a) nach 7 d Lagerung im Polybecher

b) nach 6 d Lagerung in destilliertem Wasser (Durchschnittswerte aus 6 Proben)

| Härter gemäß | Druckfestigkeit $[N/cm^2]$ nach Behandlung | |
|---|---|---|
|  | a) | b) |
| Verf. d. Fa. Rhône Poulenc, Härter: Durcisseur[R] | 230 | 35,6 |
| EP-A 0 028 495 (ohne $CaCl_2$) | 19 | zerfallen |
| EP-A 0 028 495 (mit $CaCl_2$) | 16 | 15 |
| vorl. Erf., Beispiele | | |
| 5 | 457,5 | 98 |
| 7 | 285 | |
| 8 | 305 | |
| 9 | 280 | |
| 10 | 285 | |
| vorl. Erf., Beispiel 15 | 450 | 275 |

0137887

HENKEL KGaA
ZR-FE/Patente

## Beispiel 20
### Bestimmung des chemischen Sauerstoffbedarfs (CSB-Wert)

Prüfkörper, die, wie in Beispiel 19 beschrieben, hergestellt worden waren, wurden nach 7 Tagen luftdichter Lagerung in einem 1-1-Polybecher auf ein gelochtes VA-Stahlpodest (l = 50 mm, h = 20 mm) gestellt. Anschließend wurden 900 ml destilliertes Wasser zugegeben, der Polybecher verschlossen und das Wasser mit Hilfe eines Magnetrührwerkes gerührt.

Die Bestimmung des CSB-Wertes erfolgte nach 1 h, 4 h, 8 h, nach 1, 3 und 6 Tagen.

Die erhaltenen CSB-Werte der Prüfkörper, die mit den erfindungsgemäßen Härtern gehärtet worden waren, wurden mit denen von Prüfkörpern verglichen, deren Härtung mit Mischungen nach dem Stand der Technik erfolgt war. Die gefundenen Werte sind der nachfolgenden Tabelle 5 zu entnehmen.

Patentanmeldung    D6883 EP

0137887
HENKEL KGaA
ZR-FE/Patente

Tabelle 5

CSB-Werte der Eluate von Prüfkörpern (Durchschnitt-werte aus 6 Proben)

| Härter gemäß | CSB-Wert $[mg\ O_2/l]$ nach Ablauf von | | | | | |
|---|---|---|---|---|---|---|
| | 1h | 4h | 8h | 1d | 3d | 6d [a] |
| Verf. d. Fa. Rhône Poulenc, Härter: Durcisseur[R] | 1434 | 2405 | 3161 | 5096 | 7305 | 839 |
| EP-A 0 028 495 (ohne $CaCl_2$) | 122 | 210 | 287 | 503 | 678 | 660 |
| EP-A 0 028 495 (mit $CaCl_2$) | 75 | 143 | 192 | 342 | 443 | 65 |
| vorl. Erf., Bsp. | | | | | | |
| 5 | 342 | 723 | 1008 | 1350 | 1681 | 192 |
| 7 | 639 | 1380 | 1615 | 2703 | 3583 | 297 |
| 8 | 526 | 1238 | 1460 | 2473 | 3570 | 275 |
| 9 | 611 | 1546 | 1668 | 2892 | 3753 | 284 |
| 10 | 562 | 1440 | 1726 | 3038 | 4066 | 270 |
| vorl. Erf. (Bsp. 15) | 527 | 1066 | 1512 | 2560 | 3595 | 301 |

Bemerkungen:

a) Nach 3 d Lagerung bei RT in dest. Wasser Restwasser verworfen und erneut in 900 ml frischem dest. Wasser gelagert.

Patentanmeldung  D6883 EP

0137887

HENKEL KGaA
ZR-FE/Patente

P a t e n t a n s p r u c h

Härtergemische für Alkalimetallsilikatlösungen, dadurch gekennzeichnet, daß sie 20 bis 60 Gew.-%, bezogen auf die Gesamtmenge an Härter, Kohlesäuredimethylester und 80 bis 40 Gew.-%, bezogen auf die Gesamtmenge an Härter, Kohlensäurediethylester enthalten und wässrigen Alkalimetallsilikatlösungen in einer Menge von 4 bis 11 Gew.-% zugesetzt werden.